(19) Europäisches Patentamt / European Patent Office / Office européen des brevets

(11) **EP 4 132 765 B1**

(12) **EUROPEAN PATENT SPECIFICATION**

(45) Date of publication and mention
of the grant of the patent:
**09.07.2025 Bulletin 2025/28**

(21) Application number: **21719221.0**

(22) Date of filing: **08.04.2021**

(51) International Patent Classification (IPC):
**B29C 48/68** (2019.01)   **B29C 64/209** (2017.01)
**B33Y 30/00** (2015.01)   **B29C 48/685** (2019.01)

(52) Cooperative Patent Classification (CPC):
**B29C 48/6801; B29C 48/681; B29C 48/685;
B29C 64/209; B33Y 30/00;** B29C 64/118;
B33Y 10/00

(86) International application number:
**PCT/GB2021/050864**

(87) International publication number:
**WO 2021/205174 (14.10.2021 Gazette 2021/41)**

(54) **LIQUEFIER FOR AN EXTRUSION-BASED ADDITIVIE MANUFACTURING SYSTEM AND METHOD FOR ITS MANUFACTURING**

VERFLÜSSIGER FÜR EIN SYSTEM ZUR GENERATIVEN FERTIGUNG AUF EXTRUSIONSBASIS UND VERFAHREN ZU DESSEN HERSTELLUNG

LIQUÉFACTEUR POUR UN SYSTÈME DE FABRICATION ADDITIVE PAR EXTRUSION ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2020 GB 202005193**

(43) Date of publication of application:
**15.02.2023 Bulletin 2023/07**

(60) Divisional application:
**25179903.7**

(73) Proprietor: **E3D-Online Limited
Oxfordshire OX44 7RW (GB)**

(72) Inventors:
• **MORTIMER, Sanjay
Chalgrove Oxfordshire OX44 7RW (GB)**
• **VAN DER KREEK, Jon
Chalgrove Oxfordshire OX44 7RW (GB)**

(74) Representative: **HGF
HGF Limited
1 City Walk
Leeds LS11 9DX (GB)**

(56) References cited:
**EP-A1- 2 905 118     EP-B1- 2 905 118
US-A- 5 005 731     US-A1- 2017 232 674**

**Description**

This invention relates generally to a liquefier for use in an extrusion-based additive manufacturing (EAM) system. More specifically, although not exclusively, this invention relates to a liquefier tube, a liquefier assembly, an extrusion head and a method of manufacturing a liquefier tube for use in an EAM system .

Extrusion-based additive manufacturing systems, e.g. Fusion Filament Fabrication (FFF) systems, are used to build a physical object from a digital representation in a layer-by-layer manner by extruding, through a nozzle, a melted feedstock material.

The feedstock normally takes the form of a continuous filament of thermoplastic material. Commonly, the filament is fed from a spool and advanced through a movable extrusion head containing a liquefier assembly. The liquefier assembly is configured to melt the filament such that it can be extruded through a nozzle and deposited on a print bed.

The liquefier assembly includes a liquefier section, which can be in the form of a tube, along which the filament is advanced, and a heater or heater cartridge external of the liquefier tube. The heater heats the liquefier section and, by virtue of thermal transfer, the filament. The temperature of the filament is raised above its melting point, causing it to liquify and allowing the material to be extruded from the nozzle. Extrusion pressure is applied by virtue of the continual advancement of the filament upstream of the nozzle.

Traditionally, both the filament and the channel or passage within or extending along the liquefier section are of substantially circular cross-section. It has been observed that because of the low thermal conductivity of thermoplastic material, heat from the heater is not efficiently and quickly transferred to the centre of a circular filament. This, in turn, can have a negative impact on both the rate and quality of extrusion.

EP2905118 describes an extrusion nozzle with a circular inlet opening, a non-circular taper downstream of the inlet opening and an outlet opening downstream of the non-circular taper. US5005731 describes a hand-held extruder with a flattened dispensing nozzle.

It is a first non-exclusive object of the invention to provide a liquefier that overcomes, or at least mitigates the drawbacks of the prior art.

It is a further non-exclusive object of the invention to provide an improved liquefier, liquefier tube, liquefier assembly, extrusion head and method manufacturing a liquefier.

Accordingly, a first aspect of the invention provides a liquefier according to claim 1.

Another aspect of the invention provides a liquefier assembly according to claim 12.

Another aspect of the invention provides an additive manufacturing system according to claim 13.

Another aspect of the invention provides a method of manufacturing a liquefier tube according to claim 14.

The method may comprise providing a tubular body having a substantially constant wall thickness.

The method may comprise providing, e.g. forming, attaching or connecting, an extrusion tip at the other end of the tubular body, e.g. opposite the inlet portion, to form an outlet for dispensing material in a molten state. Providing an extrusion tip may comprise forming, attaching or connecting the extrusion tip to the other end of the tubular body, e.g. opposite the inlet portion. The extrusion tip may form or describe an outlet, e.g. for dispensing material in a molten state.

The method may comprise deforming or crushing the tubular body at a location spaced from one of its ends, such that the tubular body transitions from the substantially circular inlet portion to the non-circular portion downstream of the inlet.

The method may comprise deforming the tubular body by hydroforming. Deforming the tubular body by hydroforming may comprise placing the tubular body, or a portion thereof, in a forming tool or between a pair of dies. Deforming the tubular body by hydroforming may comprise injecting fluid under pressure into a passageway described by the tubular body so as to deform the tubular body, or a portion thereof, e.g. such that it conforms to a profile described by the forming tool or pair of dies.

Another method of manufacturing a liquefier or liquefier tube, e.g. for use in an extrusion-based additive manufacturing system, which is not claimed, comprises deforming a first sheet of material to form a first part of a liquefier or liquefier tube, deforming a second sheet of material to form a second part of a liquefier or liquefier tube, and attaching the first part to the second part to form a tubular body of the liquefier or liquefier tube.

The method may comprise deforming the first sheet and/or the second sheet into a channel section. The method may comprise deforming the first sheet and/or second sheet using a press, forming machine or metal stamping machine. The method may comprise deforming the first sheet and/or the second sheet by hydroforming. The method may comprise deforming the first sheet and/or the second sheet by stamping or forming.

The first sheet and/or the second sheet may be or comprise metal, for example stainless steel. The first sheet and/or the second sheet may be or comprise brass, copper, tungsten, titanium, molybdenum, beryllium copper or any other suitable metal or alloy.

The first sheet and/or the second sheet may comprise a polymeric material. The method may comprise heating the first and/or second sheet prior to deforming, e.g. above its glass transition temperature and/or so as to increase ductility and/or malleability.

The first part and/or second part of the liquefier or liquefier tube may each comprise one half of the liquefier, liquefier tube or tubular body of the liquefier tube.

The first part may be attached to the second part by welding or brazing.

According to another aspect of the invention there is provided a method of manufacturing a liquefier according to claim 15.

The first block and/or the second block may comprise a metal, e.g. stainless steel. The first block and/or the second block may be formed of or comprise brass, copper, tungsten, titanium, molybdenum, beryllium copper or any other suitable metal or alloy.

The first block and second block may be connectable, e.g. removably connectable, to one another so as to describe the liquefier, liquefier tube or a passageway thereof.

The liquefier may comprise a tube, or a hollow or tubular body, which may have a substantially circular cross-section. The outlet may comprise an extrusion tip, e.g. for dispensing material in a molten state.

The liquefier or body may have a substantially constant wall thickness.

Advantageously, providing a tubular body having a substantially constant wall thickness allows for easier, and cheaper, manufacture of the liquefier tube.

The extrusion tip may be formed of or comprise a nozzle. The method may comprise providing, for example forming, attaching or connecting, a nozzle, e.g. at the other end of the body.

The extrusion tip or nozzle may be connected, e.g. removably, to the liquefier or body. The extrusion tip or nozzle may be brazed or welded to the liquefier or body.

The method may comprise forming, attaching or connecting the extrusion tip or nozzle, e.g. removably, to the liquefier, liquefier tube or body. The method may comprise brazing or welding the extrusion tip or nozzle to the liquefier, liquefier tube or body, e.g. the other end of the body.

The non-circular portion of the liquefier or body may comprise a deformed or crushed portion.

In examples, deforming or crushing the liquefier or body or providing the non-circular portion comprises deforming or crushing the liquefier or body in a first region, e.g. to provide a first segment or section, and deforming or crushing the liquefier or body in a second region, e.g. to provide a second segment or section.

The non-circular portion may comprise the first segment or section and/or second segment or section.

The liquefier or body may be deformed, e.g. by crushing, a first region to provide a first segment of the non-circular portion.

The liquefier or body may be deformed, e.g. by crushing, a second region, downstream of the first region, to provide a second segment of the non-circular portion downstream of the first segment. The first segment and/or second segment may be non-circular.

In examples, deforming or crushing the liquefier or body comprises compressing the liquefier or body. Deforming or crushing the liquefier or body may comprise compressing the liquefier or body in a first region, e.g. to provide a first segment or section, and compressing the liquefier or body in a second region, e.g. to provide a second segment or section.

In embodiments, the method may comprise compressing, deforming or crushing the liquefier or body to a first extent in a first region, and/or compressing, deforming or crushing the liquefier or body to a second extent, e.g. greater than the first extent, in a second region, e.g. so as to provide a tapered profile.

The second region or second segment or section may be downstream of the first region or first segment or section.

The non-circular portion of the liquefier or body may extend along a portion of the length, e.g. along a longitudinal axis or principal axis, of the liquefier, liquefier tube or body.

The non-circular portion of the liquefier or body may comprise a tapered cross-sectional profile. The flow area of the passageway of the non-circular portion of the liquefier or body may comprise a tapered profile.

The non-circular portion may taper along a portion of the length, e.g. along a longitudinal axis or principal axis, of the liquefier or body. The non-circular portion may have a major dimension and a minor dimension. The minor dimension may taper, e.g. along a portion of the length of the non-circular portion. The minor dimension may decrease, e.g. along a portion of the length of the non-circular portion.

Providing a taper, as per embodiments of the invention, is advantageous in that as the filament is advanced along the liquefier or liquefier tube, the molten portion (located adjacent the wall of the tubular body) is moved toward the centre of the flow path or passageway. Further, the distance the heat has to travel to reach the centre of the passageway or flow path is decreased.

The non-circular portion of the liquefier or body may comprise a plurality of segments or sections. Each of the plurality of segments or sections may comprise a deformed or crushed segment of the liquefier or body. Each of the plurality of segments or sections may be arranged, e.g. in series, along the length of, or principal axis of, the liquefier, liquefier tube or body. Each of the plurality of segments or sections may be arranged along a longitudinal axis of the liquefier, liquefier tube or body.

Each of the plurality of segments or sections, hereinafter segments, may have a different cross-sectional shape, configuration or cross-sectional profile, e.g. from one another. One, e.g. a first, of the plurality of segments may have a different cross-sectional shape, configuration or cross-sectional profile from another, e.g. a second, of the plurality of segments.

The flow area of the passageway of or in the plurality of segments may have a different cross-sectional shape, configuration or cross-sectional profile, e.g. from one another. The flow area of the passageway of or in one, e.g. a first, of the plurality of segments may have a different cross-sectional shape, configuration or cross-sectional profile from the passageway of or in another, e.g. a second, of the plurality of segments.

A minor dimension of a first of the segments may be greater than a minor dimension, e.g. a corresponding minor dimension, of a second of the segments. A major dimension of the a first of the segments may be less than a major dimension, e.g. a corresponding minor dimension, of the a second of the segments. The second segment may be downstream of the first segment.

The first segment may be deformed so as to have a minor dimension which is greater than a minor dimension of the deformed second segment.

The method may comprise compressing the liquefier or body to a first extent or magnitude in a first region to provide the first segment, The method may comprise compressing the liquefier or body to a second extent or magnitude in a second region to provide the second segment. The second extent or magnitude may be different from, e.g. greater or less than, the first extent or magnitude.

In some examples, the first segment and the second segment, e.g. their major and/or minor dimensions, are rotationally offset or skewed from one another. The first segment and the second segment may be skewed or twisted from, or relative to, one another.

The first segment and second segment may comprise a skew angle described therebetween. The first segment may comprise a portion of the liquefier or body deformed or crushed in a direction that is skewed or rotationally offset relative to a direction in which the second segment is deformed or crushed.

Corresponding minor and/or major dimensions of the first segment and second segment may be rotationally offset or skewed from one another.

The liquefier or body may be deformed such that a minor and/or major dimension of the first segment and a corresponding minor and/or major dimension of the second segment are rotationally offset from one another.

Providing rotational offset, or skew, helps improve the thermal transmission characteristics of the liquefier, liquefier tube or body by creating a tortuous flow path for the molten material. Such a flow path promotes mixing of the melted or molten material as it is advanced along the liquefier, liquefier tube or body, allowing for more even thermal distribution through the material.

The method may comprise compressing, deforming or crushing the liquefier or body in the first region in a first direction and compressing, deforming or crushing the liquefier or body in the second region in a second direction, the second direction being skewed or rotationally offset relative to the first direction.

The cross-section, e.g. the cross-sectional shape, of first segment (or the passageway thereof or therein) and/or second segment (or the passageway thereof or therein) may comprise an axis of symmetry. An axis of symmetry of the first segment (or the passageway thereof or therein), e.g. the cross-sectional shape thereof, and a corresponding axis of symmetry of the second segment (or the passageway thereof or therein), e.g. the cross-sectional shape thereof, may be rotationally offset or skewed from one another.

In embodiments, the liquefier or body comprises a substantially circular portion intermediate two or more segments. The liquefier or body may comprise a substantially circular portion intermediate the first segment and the second segment.

The liquefier or body may be deformed so as to comprise a substantially circular portion intermediate the first segment and second segment.

The non-circular cross-section of the non-circular portion (or the passageway thereof or therein), or the liquefier or body may be deformed such that, one or more segments thereof, may be substantially stadium shaped, disco-rectangular or obround.

The non-circular cross-section of the non-circular portion, or one or more segments thereof, (or the passageway thereof or therein) may be oval, elliptical, regular polygonal, irregular polygonal, simple convex polygonal or simple concave polygonal.

The non-circular cross-section of the non-circular portion, or one or more segments thereof, (or the passageway thereof or therein) may be star-shaped.

The transition or change from the substantially circular portion to the non-circular portion, or one or more segments thereof, may comprise a continual transition, gradual transition and/or tapered transition.

The transition or change from the substantially circular portion to the non-circular portion, or one or more segments thereof, may comprise a staged, discretised and/or stepped transition.

The first segment (or the passageway thereof or therein) may have a different cross-sectional shape, configuration or cross-sectional profile from the second segment (or the passageway thereof or therein).

In examples, the non-circular portion may comprise a first non-circular portion and a second non-circular portion. The first non-circular portion and/or second non-circular portion may comprise a plurality of segments or sections. Each of the plurality of segments or sections may comprise a deformed or crushed segment of the liquefier or body.

Each of the plurality of segments or sections may be arranged, e.g. in series, along the length of, or principal axis of, the liquefier, liquefier tube or body and/or first and/or second non-circular portion. Each of the plurality of segments or sections may be arranged along a longitudinal axis of the liquefier, liquefier tube or body.

The first non-circular portion and/or second non-circular portion, e.g. their major and/or minor dimensions, may be rotationally offset, twisted or skewed from one another. The respective segments or sections of the first non-circular portion and/or second non-circular portion, e.g. their major and/or minor dimensions, may be rotationally offset or skewed from one another.

The first non-circular portion and second non-circular portion may comprise a skew angle described therebetween. The skew angle may comprise 90°, 60°, 45°, 30° or another angle.

The first non-circular portion or plurality of segments or sections thereof may comprise a portion of the body deformed or crushed in a direction that is skewed or rotationally offset relative to a direction in which the second non-circular portion or plurality of segments or sections thereof is deformed or crushed.

Corresponding minor and/or major dimensions of the first non-circular portion and second non-circular portion may be rotationally offset or skewed from one another. The liquefier or body may be deformed such that a minor and/or major dimension of the first non-circular portion and a corresponding minor and/or major dimension of the second non-circular portion are rotationally offset from one another.

The first non-circular portion and second non-circular portion may comprise a transition region or zone therebetween. The transition region or zone may extend along a portion of the length of the liquefier, liquefier tube or body.

The transition region or zone may comprise or accommodate the skew of the first non-circular portion and second non-circular portion, or one or more segments thereof, relative to one another.

The method may comprise deforming, crushing or compressing the liquefier or body in the first region to form a first segment (or the passageway thereof or therein) having a first cross-sectional shape. The method may comprise deforming, crushing or compressing the liquefier or body in the second region to form a second segment (or the passageway thereof or therein) having a second cross-sectional shape, e.g. different from the first cross-sectional shape.

Deforming, crushing or compressing the liquefier or body may comprise placing the liquefier or body in a press. Deforming, crushing or compressing the liquefier or body may comprise placing the liquefier or body in a forming machine, e.g. between a punch and die or between a pair of dies.

The liquefier or body may be deformed, crushed or compressed by rollers, e.g. a pair of opposed rollers, for example so as to form a continuous transition between the inlet portion and the non-circular portion. The press may comprise one or more, e.g. opposed rollers. Deforming, crushing or compressing the liquefier or body may comprise deforming, crushing or compressing the liquefier or body in segments, e.g. discrete segments.

The liquefier, body or inlet portion thereof may have an internal diameter, which may be between 1 and 4mm, for example between 1.5 and 3.5 mm, e.g. between 1.75 and 3.25 mm. The liquefier or body may have a diameter of 2.0 or 3.0 mm.

The liquefier or body may comprise a thin-walled tube. The liquefier or body or thin-walled tube may comprise a, or be formed of, a thermally conductive material.

The liquefier or body may have a wall thickness of less than 1mm, preferably less than 0.75 mm, for example between 0.1 and 0.5 mm.

The liquefier tube or body may have a length of 100 mm or less, for example 90 mm or less or 80 mm or less, e.g. 70mm or less. The liquefier or body may have a length of between 10 and 100mm, for example between 10 and 70 mm, e.g. between 15 and 60 mm.

The liquefier, liquefier tube or body may comprise a heating zone. The heating zone may be configured to be heated, in use. The heating zone and non-circular portion may coincide or overlap. The heating zone may encompass or span the non-circular portion.

The heating zone may be a portion or length of the liquefier or body at or to which heat is applied, e.g. so as to melt a filament material being advanced therealong. The heating zone may have a length of less than 100mm, for example less than 90mm, less than 80mm, less than 70mm or less than 60mm. The heating zone may have a length of 56mm, 26mm or 16mm.

The extrusion tip or nozzle may have an internal diameter which is smaller than that of the liquefier or body. The extrusion tip or nozzle may have a diameter of 3 mm or less, for example 2.5 mm or less. The extrusion tip or nozzle may have a diameter of between 0.05 and 2.5 mm, e.g. between 0.1 and 1.5 mm or between 0.1 and 1.4 mm.

The extrusion tip or nozzle (or the passageway thereof or therein) may comprise a substantially circular portion or substantially circular cross-section.

The non-circular portion, or one or more segments thereof, may be intermediate the inlet and outlet.

In embodiments, the substantially circular portions (or the passageway thereof or therein) and the non-circular portions, or segments thereof, may all have substantially equal cross-sectional areas. The non-circular portion, or one or more segments thereof, (or the passageway thereof or therein) may have a substantially constant cross-sectional area. The passageway of or in the non-circular portion, or one or more segments thereof, may have a substantially constant flow area.

The liquefier or body may be deformed such that the passageway of or in the substantially circular portion and the non-circular portion have substantially equal flow areas.

The liquefier or body and/or passageway may have or comprise a constant or substantially constant hydraulic diameter. The non-circular portion, first non-circular portion and/or second non-circular portion may have or comprise a constant or substantially constant hydraulic diameter.

The hydraulic diameter is defined by the following equation:

$$D_H = \frac{4A}{P}$$

Where $D_H$ is the hydraulic diameter, A is the flow area and P is the perimeter described by the tubular body.

The provision of a liquefier or liquefier tube having a constant or substantially constant hydraulic diameter provides, in use, a substantially constant pressure as a filament material is being advanced therealong.

Therefore, in the case of a liquefier or liquefier tube, the change in cross-sectional shape in the non-circular portion, first non-circular portion and/or second non-circular portion allows for more effective heat transfer to a filament material as is being advanced, but whilst without increasing the required applied pressure to generate a given flow rate.

The liquefier or body may be made or formed of or comprise metal. The liquefier or body may be made of or comprise stainless steel. In embodiments, the liquefier or body may be made of or comprise brass, copper, tungsten, titanium, molybdenum, beryllium copper or any other suitable metal or alloy.

The liquefier or body may be made of or comprise a polymeric material, e.g. a thermally conductive polymeric material. Such polymeric material preferably has a melting point and/or glass transition temperature substantially higher than the filament material to melted.

The liquefier, liquefier tube or body may comprise a heating zone. The heating zone may be configured to be heated, in use. The heating zone and non-circular portion may coincide or overlap. The heating zone may encompass or span the non-circular portion.

According to another aspect of the invention, there is provided a liquefier assembly for use in an extrusion-based additive manufacturing system, the liquefier assembly comprising a liquefier or liquefier tube as described above, and a heating means, e.g. a heater, heating element, heater element or heater cartridge, for heating a filament of material advanced, in use, into and/or along the liquefier or liquefier tube.

The heating means may comprise a heating block or heater block. The heating block or heater block may comprise a heating element or heating cartridge. The heating means may at least partially surround the liquefier or liquefier tube and/or may surround or lie adjacent a heating zone of the liquefier or liquefier tube. The heating element or heating cartridge may extend along the length of the heating block or heater block.

The heating means, e.g. the heater, heating block or heater block, may clamp around the liquefier or liquefier tube. The heating means, heating block or heater block may comprise a temperature sensor. The heating cartridge or heating element and/or temperature sensor may each be operatively connected with a controller, e.g. so as to provide closed-loop temperature control.

According to a further aspect of the invention, there is provided an extrusion head or extruder comprising a liquefier or liquefier tube as described above, or a liquefier assembly as described above.

The extrusion head or extruder may comprise a feeder or feeding mechanism. The feeder or feeding mechanism may be located upstream of the liquefier, liquefier tube or liquefier assembly. The feeder or feeding mechanism may be configured to advance a filament of material, in use, into and/or along the liquefier or liquefier tube.

The feeder or feeding mechanism may comprise one or more rotatable members or gears, which may be configured to contact, in use, a surface of a filament being fed or advanced into the liquefier, liquefier tube or liquefier assembly.

The feeder or feeding mechanism may comprise a pair, e.g. of opposed, rotatable members or gears, which may be configured to contact, in use, a surface of a filament being fed or advanced into the liquefier, liquefier tube or liquefier assembly.

The feeder or feeding mechanism or one or more rotatable members may comprise a feed roller. The feeder or feeding mechanism or one or more rotatable members may comprise a pair of feed rollers.

At least one or each of the feed rollers may be driven, e.g. by a stepper motor.

One or more of the rotatable members may comprise one or more surface features, which may be configured to engage with or grip, in use, a surface of a filament of material received within or being fed or advanced into the liquefier, liquefier tube or liquefier assembly.

The surface feature(s) may comprise one or more topographical feature(s). The surface feature(s) may comprise one or more groove(s), protrusion(s) or rib(s).

According to another aspect of the invention, there is provided an additive manufacturing system comprising a liquefier or liquefier tube as described above, a liquefier assembly as described above or an extrusion head as described above.

The additive manufacturing system may be a fused filament fabrication (FFF) system.

For the avoidance of doubt, any of the features described herein apply equally to any aspect of the invention. For example, the liquefier or liquefier tube may comprise any one or more features of the liquefier assembly, extrusion head or additive manufacturing system relevant to the liquefier or liquefier tube or vice-versa. Similarly, the method may comprise any one or more features or steps relevant to one or more features of the liquefier, liquefier tube, liquefier assembly, extrusion head or the additive manufacturing system.

Another aspect of the invention provides a computer program element comprising and/or describing and/or defining a three-dimensional design for use with a simulation means or a three-dimensional additive or subtractive manufacturing means or device, e.g. a three-dimensional printer or CNC machine, the three-dimensional design comprising an embodiment of the liquefier, liquefier tube, liquefier assembly, extrusion head and/or additive manufacturing system described above.

A further aspect of the invention provides a computer program element comprising computer readable program code means for causing a processor to execute a procedure to implement one or more steps of the aforementioned method.

A yet further aspect of the invention provides the computer program element embodied on a computer readable medium.

A yet further aspect of the invention provides a computer readable medium having a program stored thereon, where the program is arranged to make a computer execute a procedure to implement one or more steps of the aforementioned method.

A yet further aspect of the invention provides a control means or control system or controller comprising the aforementioned computer program element or computer readable medium.

For purposes of this disclosure, and notwithstanding the above, it is to be understood that any controller(s), control units and/or control modules described herein may each comprise a control unit or computational device having one or more electronic processors. The controller may comprise a single control unit or electronic controller or alternatively different functions of the control of the system or apparatus may be embodied in, or hosted in, different control units or controllers or control modules. As used herein, the terms "control unit" and "controller" will be understood to include both a single control unit or controller and a plurality of control units or controllers collectively operating to provide the required control functionality. A set of instructions could be provided which, when executed, cause said controller(s) or control unit(s) or control module(s) to implement the control techniques described herein (including the method(s) described herein). The set of instructions may be embedded in one or more electronic processors, or alternatively, may be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present invention is not intended to be limited to any particular arrangement. In any event, the set of instructions described herein may be embedded in a computer-readable storage medium (e.g., a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:

Figure 1 is a schematic of an additive manufacturing system incorporating aspects of the invention;

Figure 2 is a perspective view of a liquefier tube according to a first example;

Figure 3 is a side view of the liquefier tube of Figure 2;

Figure 4 is a sectional view of the liquefier tube of Figures 2 and 3;

Figure 5 is an end view of the liquefier tube of Figures 2 to 4.

Figure 6 is a perspective view of a liquefier tube according to another example;

Figure 7 is a side view of the liquefier tube of Figure 6;

Figure 8 is a top view of the liquefier tube of Figures 6 and 7;

Figure 9 is an end view of the liquefier tube of Figures 6 to 8;

Figure 10 is a perspective view of a split-block liquefier;

Figure 11 is a perspective view of one half of the split-block liquefier of Figure 10;

Figure 12 is a cross-sectional view through the split block liquefier of Figure 10;

Figure 13 is a perspective view of a liquefier tube according to another example;

Figure 14 is a side view of the liquefier tube of Figure 13;

Figure 15 is a sectional perspective view of the liquefier tube of Figures 13 and 14;

Figure 16 is an end view of the liquefier tube of Figures 13 to 15;

Figure 17 is a perspective view of a liquefier tube according to another example;

Figure 18 is a side view of the liquefier tube of Figure 17;

Figure 19 is a top view of the liquefier tube of Figures 17 and 18;

Figure 20 is a sectional perspective view of the liquefier tube of Figures 17 to 19; and

Figure 21 is an end view of the liquefier tube of Figures 17 to 20.

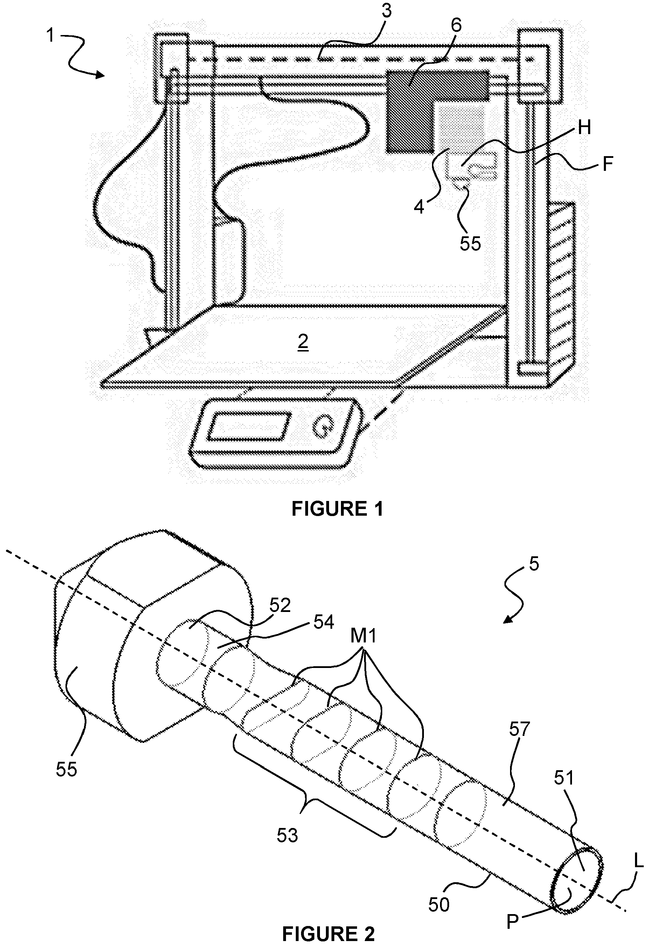

Referring now to Figure 1, there is shown a schematic of a extrusion-based additive manufacturing system 1 including a print bed 2, a gantry 3 located above the print bed 2 and an extrusion head 4 carried by, and movable along, the gantry 3. The gantry 3 is in the form of a guide rail system configured to allow movement of the extrusion head 4 in a horizontal plane within a boundary described by the print bed 2. The gantry 3 is supported above the print bed 2 by a structural frame F.

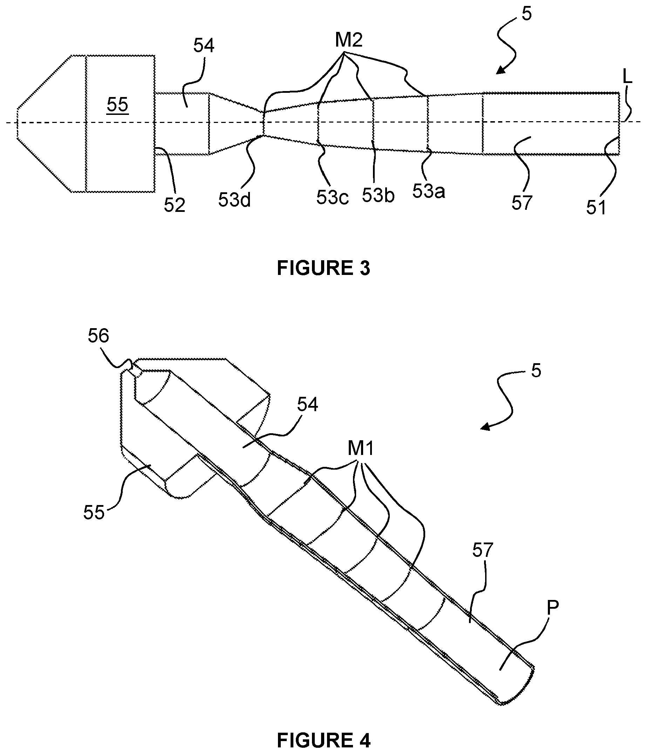

The extrusion head 4 includes a liquefier assembly having a liquefier tube 5 in this example (shown in Figures 2 to 5, in particular), a heating means H in the form of a heating element in this example, for heating a filament of material received within the liquefier tube 5, and a feeding mechanism 6 for advancing a filament of material along the liquefier tube 5.

Referring now to Figures 2 to 5, there is shown a liquefier tube 5 for use in the manufacturing system 1 of Figure 1.

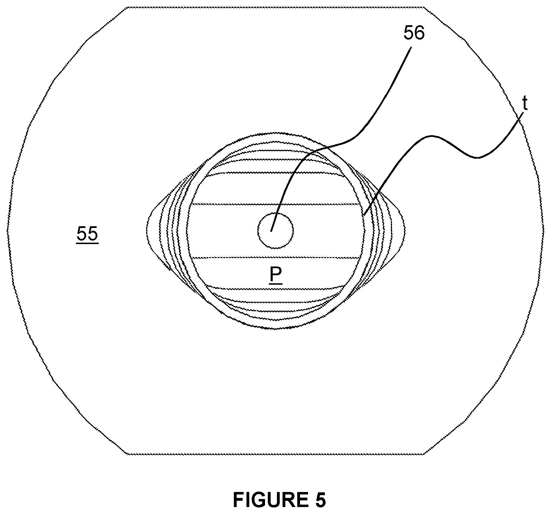

The liquefier tube 5 includes a tubular body 50 providing a passageway or flow-path (hereinafter passageway) P extending therealong and having sidewall of substantially constant wall thickness t (as shown in Figure 5, in particular) that extends along a longitudinal axis L. The tubular body 50 is formed of metal, in particular stainless steel, in this example.

A first, upstream end of the liquefier tube 5 is provided with an inlet portion 51 of substantially circular cross-section. A second, downstream end 52 of the liquefier tube 5, opposite the inlet portion 51, is also provided with a substantially circular cross-section. The inlet portion 51 and second end 52 are located at opposite ends of the tubular body 50.

Intermediate the inlet portion 51 and second end 52 is a non-circular portion 53 having a non-circular cross-section, in the form of an obround cross-section in this example. In the present example, the non-circular portion 53 extends uninterrupted along a portion of the length of the tubular body 50, and has a substantially constant cross-sectional area. A first end portion 57, having a substantially circular cross-section extends along a portion of the length of the tubular body 50 between the inlet portion 51 and non-circular portion 53.

In the present example, the non-circular portion 53 has four discrete segments: a first segment 53a, second segment 53b downstream of first segment 53a, third segment 53c downstream of second segment 53b and fourth segment 53d downstream of third segment 53c. Each of the segments 53a:53d are arranged in series along the longitudinal axis L of tubular body 50.

The tubular body 50 is deformed by crushing to provide the non-circular portion 53. In the present example, each segment 53a:53d corresponds to a crush point/zone at which the tubular body 50 is deformed. A substantially continuous transition is provided between each segment 53a:53d and between the first end portion 57 and non-circular portion 53.

The tubular body 50 includes a continual transition when viewed downstream from the substantially circular cross section of the inlet portion 51 to the non-circular cross section of the first segment 53a. The cross sectional area at the inlet portion 51 is substantially equal to the cross sectional area of the first segment 53a in this example.

Each of the segments 53a:53d has a major dimension M1 and a minor dimension M2. When viewed downstream from the inlet portion 51 toward the second end 52, major dimension M1 increases whilst the minor dimension M2 decreases. The major dimension M1 reaches its maximum and the minor dimension M2 reaches its minimum at the fourth segment 53d.

Throughout the non-circular portion 53, the minor dimension M2 is less than the diameter of the inlet portion 51 and second end 52. Therefore, the distance from the sidewall of the tubular body 50 to the centre of the passageway P is reduced in the non-circular portion 53 when compared to the substantially circular cross-section of the inlet portion 51 and second end 52.

Downstream of the fourth segment 53d the non-circular portion 53 transitions from a non-circular cross section to a second end portion 54 having a substantially circular cross section at the downstream end 52. The second end portion 54 extends along a portion of the length of the tubular body 50 between the non-circular portion 53 and downstream end 52.

The second end 52 is provided with an extrusion tip 55 in the form of a nozzle for dispensing filament material (not shown) in a molten state. The extrusion tip 55 provides an outlet of the liquefier tube 5 and has a substantially circular passage 56 (shown in Figure 5, in particular) extending therealong. The extrusion tip 55 is welded to the tubular body 50 at the second end 52 in this example. As shown most clearly in Figure 5, the circular passage 56 of the extrusion tip 55 is of a smaller cross-sectional area than that of the tubular body 50.

In use, the liquefier tube 5 is received within an extrusion head 4 of an extrusion-based additive manufacturing system 1 (as shown in Figure 1, in particular). Filament material is fed into the inlet portion 51 by a feeding mechanism 6. The substantially circular cross-section of the inlet portion 51 is configured to receive, in use, a filament of material having a circular cross section from a feeding mechanism 6.

The filament of material is advanced along the tubular body 50. Heating means H (as shown in Figure 1, in particular), in the form of one or more heating element(s) in this example, is located within the extrusion head 4 and adjacent the liquefier tube 5. The one or more heating element(s) heat an external surface of the liquefier tube 5, which by virtue of thermal transfer, in turn heats the filament material as it is advanced.

As the filament material is advanced from the inlet portion 51 toward the non-circular portion 53, it becomes molten as a result of the heating. The cross-sectional shape of the filament material then conforms to the cross-sectional shape of the non-circular portion 53.

In the non-circular portion 53, the distance from the heating means H to the centre of the passageway P, and therefore centre of the filament material, or filament flow-path is reduced, allowing heat to more effectively reach the centre of the filament material. This allows for more effective heat transfer from the heating means H to the filament material.

Extrusion pressure is created by the feeding of filament upstream. The molten filament is extruded from the extrusion tip 55 and onto the print bed 2 (as shown more clearly in Figure 1, in particular).

The liquefier tube 5 of Figures 2 to 5 is manufactured by providing a tubular body 50 having a substantially constant wall thickness t and substantially circular cross-section. The tubular body 50 is deformed or crushed at locations defined by segments 53a:53d, so as to provide an inlet portion 51 and first end portion 57 having a substantially circular cross-section for receiving a filament of material (not shown), and a non-circular portion 53, formed of segments 53a:53d, each having a non-circular cross-section. A substantially continuous transition is provided between each segment 53a:53d.

In this example, deforming or crushing the tubular body 50 is carried out by compressing the tubular body 50 at discrete points along its length using a press.

An extrusion tip 55 is connected to the tubular body 50 at the other end 52, opposite the inlet portion 51, to form an outlet for dispensing filament material in a molten state. The extrusion tip 55 is welded to the tubular body 50 in the present example.

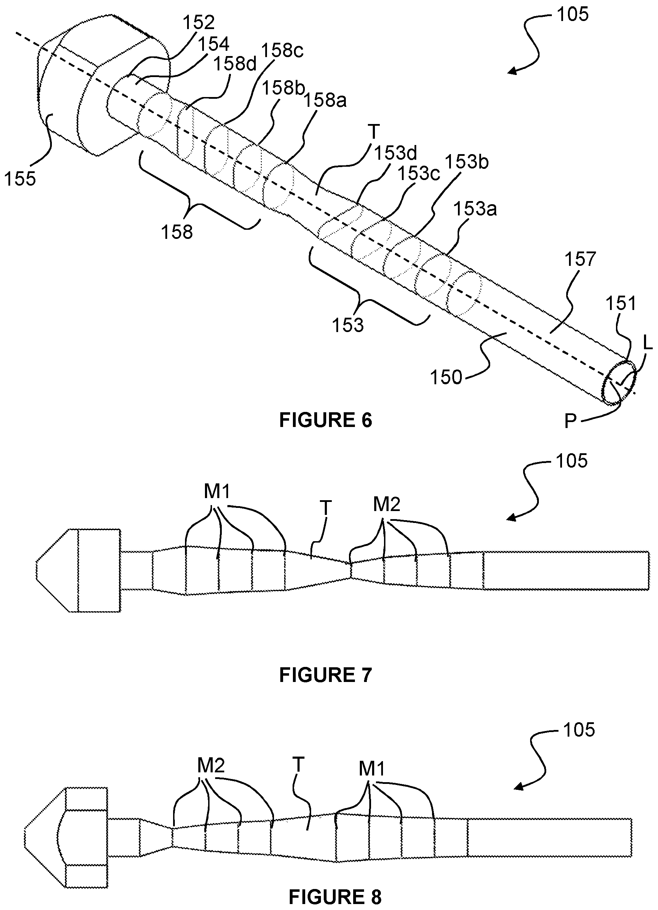

Referring now to Figures 6 to 9, there is shown a liquefier tube 105 according to another example of the invention, for use in the manufacturing system 1 of Figure 1. The liquefier tube 105 according to this example is similar to liquefier tube 5 according to the first example, wherein like features will be denoted by like references incremented by '100'.

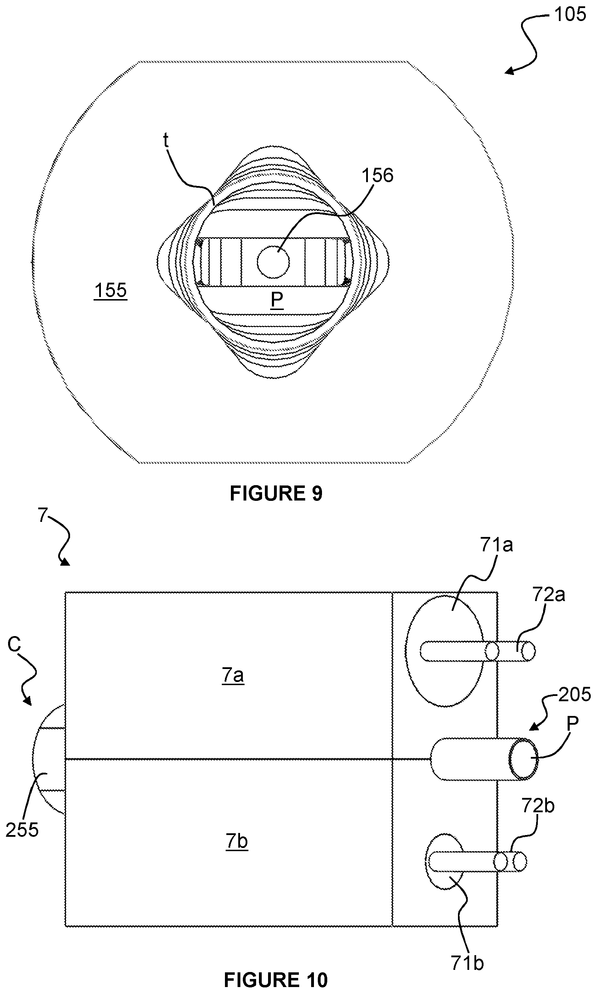

The liquefier tube 105 according to this example includes a tubular body 150 providing a passageway P extending therealong and having sidewall of substantially constant wall thickness t (as shown in Figure 9, in particular) that extends along a longitudinal axis L. As in the liquefier tube 5 according to the first example, the tubular body 150 is formed of metal, in particular stainless steel, in this example.

A first, upstream end of the liquefier tube 105 is provided with an inlet portion 151 of substantially circular cross-section. A second, downstream end 152 of the liquefier tube 105, opposite the inlet portion 151, is also provided with a substantially circular cross-section. The inlet portion 151 and second end 152 are located at opposite ends of the tubular body 150.

Intermediate the inlet portion 151 and second end 152 is a first non-circular portion 153 having a non-circular cross-section, in the form of an obround cross-section in this example. The first non-circular portion 153 is similar to non-circular portion 53 of liquefier tube 5, and extends uninterrupted along a portion of the length of the tubular body 150, and has a substantially constant cross-sectional area. A first end portion 157, having a substantially circular cross-section extends along a portion of the length of the tubular body 150 between the inlet portion 151 and first non-circular portion 153.

In this example, like the non-circular portion 53 of liquefier tube 5, the first non-circular portion 153 has four discrete segments: a first segment 153a, second segment 153b downstream of first segment 153a, third segment 153c downstream of second segment 153b and fourth segment 153d downstream of third segment 153c. Each of the segments 153a:153d are arranged in series along the longitudinal axis L of the first non-circular portion 153.

Downstream of the first non-circular portion 153, between the first non-circular portion 153 and the second end 152 is a second non-circular portion 158. The second non-circular portion 158 is similar to the first non-circular portion 153, but rotationally offset by 90 degrees.

The second non-circular portion 158 is similar to non-circular portion 53 of liquefier tube 5, and extends uninterrupted along a portion of the length of the tubular body 150, and has a substantially constant cross-sectional area. A second end portion 154, having a substantially circular cross-section extends along a portion of the length of the tubular body 150 between the second end 152 and second non-circular portion 158.

In this example, like the first non-circular portion 153, the second non-circular portion 158 has four discrete segments: a first segment 158a, second segment 158b downstream of first segment 158a, third segment 158c downstream of second segment 158b and fourth segment 158d downstream of third segment 158c. Each of the segments 158a:158d are arranged in series along the longitudinal axis L of the second non-circular portion 158.

Between the first non-circular portion 153 and second non-circular portion 158 is a transition point or zone T at which the orientation of the non-circular part of the liquefier tube 105 is rotated by 90 degrees.

The tubular body 150 is deformed by crushing to provide the first non-circular portion 153 and second non-circular portion 158. In the present example, each segment 153a:153d and 158a:158d corresponds to a crush point/zone at which the tubular body 150 is deformed. A substantially continuous transition is provided between each segment 153a:153d and 158a:158d and between the first non-circular portion 153 and second non-circular portion 158 via the transition point or zone T.

The tubular body 150 includes a continual transition when viewed downstream from the substantially circular cross section of the inlet portion 151 to the non-circular cross section of the first segment 153a. The cross sectional area at the inlet portion 51 is substantially equal to the cross sectional area of the first segment 153a in this example.

Each of the segments 153a:153d and 158a:158d has a major dimension M1 and a minor dimension M2. When viewed downstream from the inlet portion 151 toward the second end 152, within the first non-circular portion 153, major dimension M1 increases whilst the minor dimension M2 decreases. The major dimension M1 reaches its maximum and the minor dimension M2 reaches its minimum at the fourth segment 153d. The same as above applies to the second non-circular portion 158 when viewed from the transition point or zone T toward the second end 152.

In this example, the respective first segments 153a, 158a, respective second segments 153b, 158b, respective third segments 153c, 158c and respective fourth segments 153d, 158d correspond to one another in terms of cross-sectional shape, but are offset by 90 degrees. Therefore, the major dimensions M1 and minor dimensions M2 correspond to one another in each of these corresponding segments, but offset by 90 degrees.

Throughout the first non-circular portion 153 and second non-circular portion 158, the minor dimension M2 is less than the diameter of the inlet portion 151 and second end 152. Therefore, the minimum distance from the sidewall of the tubular body 150 to the centre of the passageway P is reduced in the first non-circular portion 153 and second non-circular portion 158 when compared to the substantially circular cross-section of the inlet portion 151 and second end 152.

Downstream of the fourth segment 158d the second non-circular portion 158 transitions from a non-circular cross section to the second end portion 154 having a substantially circular cross section at the downstream end 152. The second end portion 154 extends along a portion of the length of the tubular body 150 between the second non-circular portion 158 and downstream end 152.

???As in the case of liquefier tube 5, the length of the perimeter described by the tubular body 150 in the first non-circular portion 153 and second non-circular portion 158 is greater than that at the first end portion 157 and second end portion 154. This provides a greater contact area between the tubular body 150 and filament (not shown), increasing the rate of heat transfer.

The second end 152 is provided with an extrusion tip 155 in the form of a nozzle for dispensing filament material (not shown) in a molten state. The extrusion tip 155 provides an outlet of the liquefier tube 105 and has a substantially circular passage 156 (shown in Figure 9, in particular) extending therealong. The extrusion tip 155 is welded to the tubular body 150 at the second end 152 in this example. As shown most clearly in Figure 9, the circular passage 156 of the extrusion tip 155 is of a smaller cross-sectional area than that of the tubular body 150.

In use, as is the case with liquefier tube 5, liquefier tube 105 is received within an extrusion head 4 of an extrusion-based additive manufacturing system 1 (as shown in Figure 1, in particular). Filament material is fed into the inlet portion 151 by a feeding mechanism 6. The substantially circular cross-section of the inlet portion 151 is configured to receive, in use, a filament of material having a circular cross section from the feeding mechanism 6.

The filament of material is advanced along the tubular body 150. Heating means H, in the form of one or more heating element(s) in this example, is located within the extrusion head 4 and adjacent the liquefier tube 105. The one or more heating element(s) are configured to heat an external surface of the liquefier tube 105, which by virtue of thermal transfer, in turn heats the filament material as it is advanced.

As the filament material is advanced from the inlet portion 151 toward the first non-circular portion 153, it becomes molten as a result of the heating. The cross-sectional shape of the filament material then conforms to the cross-sectional shape of the first non-circular portion 153.

In the first non-circular portion 153, the distance from the heating means H to the centre of the passageway P, and therefore centre of the filament material, or filament flow-path is reduced, allowing heat to more effectively reach the centre of the filament material. This allows for more effective heat transfer.

The filament is then advanced from the first non-circular portion 153 toward the second non-circular portion 158, via the transition point or zone T. The rotational offset of the first non-circular portion 153 and second non-circular portion 158 results in mixing of the filament material, improving the heat transfer therethrough.

Extrusion pressure is created by the feeding of filament upstream. The molten filament is extruded from the extrusion tip 155 and onto the print bed 2 (as shown in Figure 1, in particular).

In the present example, the liquefier tube 105 of Figures 6 to 9 is manufactured by providing a tubular body 150 having a substantially constant wall thickness t and substantially circular cross-section. The tubular body 150 is deformed or crushed in a first direction at locations defined by segments 153a:153d, so as to provide an inlet portion 151 and first end portion 157 having a substantially circular cross-section for receiving a filament of material (not shown), and a first non-circular portion 153, formed of segments 153a:153d, each having a non-circular cross-section. A substantially continuous transition is provided between each segment 153a:153d.

Downstream of the first non-circular segment 153, the tubular body 150 is deformed or crushed in a second direction, offset by 90 degrees from the first direction. The tubular body 150 is deformed or crushed in the second direction at locations defined by segments 158a:158d so as to provide transition point or zone T, and second end portion 152 having a substantially circular cross-section.

In the present example, deforming or crushing the tubular body 150 is carried out by compressing the tubular body 150 at discrete points along its length using a press.

An extrusion tip 155 is connected to the tubular body 150 at the other end 152, opposite the inlet portion 151, to form an outlet for dispensing material in a molten state. The extrusion tip 155 is welded to the tubular body 150 in the present example.

Referring now to Figures 10 to 12, there is shown a liquefier tube 205 according to another example of the invention, for use in the manufacturing system 1 of Figure 1.

The liquefier tube 205 has a similar profile to liquefier tube 105, but, instead of the passageway P being described by a tubular body 150 it is described in part by a split heater block 7. The split heater block 7 has two halves 7a, 7b (as shown in Figure 10, in particular). Each half 7a, 7b describes one half of the passageway P of liquefier tube 205.

The halves 7a, 7b are configured to be secured together to form the split heater block 7 and liquefier tube 205. The halves 7a, 7b are configured to be secured together using screws (not shown) and are each formed of metal in this example.

In the present example, the first non-circular portion 253, transition point or zone T and second non-circular portion 258 form a first element A of the liquefier tube 205 and are described by the halves 7a, 7b. The inlet portion 251 and first end portion 257 form a second element B of the liquefier tube 205, separate from the first element A. The second end 252, second end portion 254 and extrusion tip 255 form a third element C, separate from the first element A and second element B.

The second element B is secured to a threaded aperture described in first end 70 of the split heater block 7 by virtue of a threaded connection (not shown). Similarly, the third element C is secured to a threaded aperture described in the second end 71 of the split heater block 7 by virtue of a threaded connection (not shown).

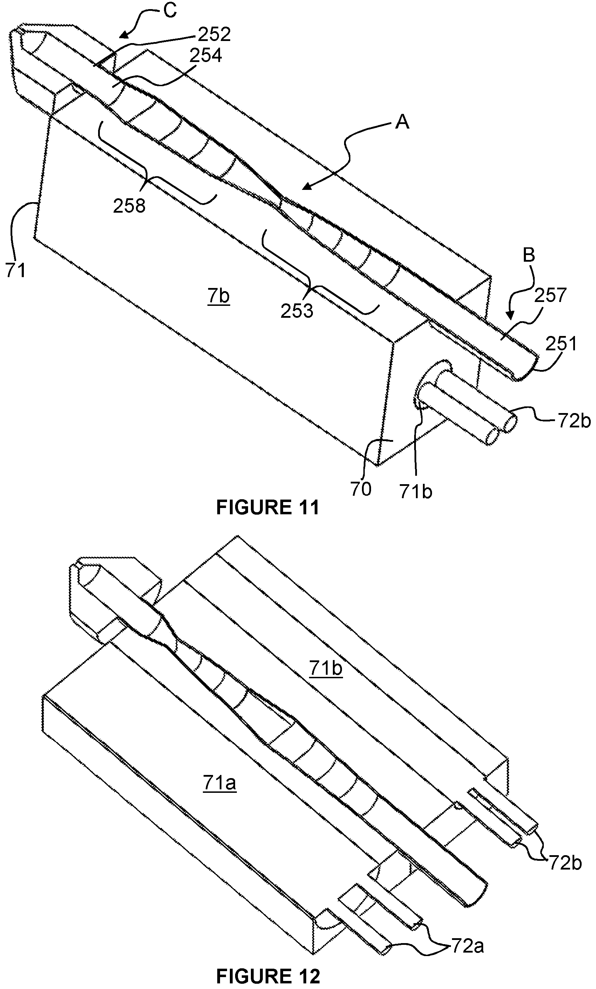

The first half 7a includes a cylindrical heater cartridge 71a including electrical wires 72a extending therefrom. The second half 7b includes a temperature sensor 71b including electrical wires 72b extending therefrom. Each of the cylindrical heater cartridge 71a and temperature sensor 71b are located adjacent the first element A and extend along the entire length of the heater block 7 from the first end 70 to the second end 71 (as shown in Figure 12, in particular).

The temperature sensor 71b and heater cartridge 71a together with a controller (not shown) allow for closed-loop feedback control of temperature via respective electrical wires 72a, 72b.

In use, the heater cartridge 71a is configured to provide heat around the entire circumference of the liquefier tube 205, in particular first element A, by virtue of conduction through the metal material of the halves 7a, 7b.

To assemble the liquefier tube 205 of Figures 10 to 12, each of the halves 7a, 7b are secured together using screws (not shown), in this example. The two halves 7a, 7b describe the first element A.

The second element B is screwed into the threaded aperture described in the first end 70 and the third element C is screwed into the threaded aperture described in the second end 71.

As is the case with liquefier tubes 5 and 105, liquefier tube 205 is configured to be received within an extrusion head 4 of an extrusion-based additive manufacturing system 1 (as shown in Figure 1, in particular). The substantially circular cross-section of the inlet portion 251 is configured to receive, in use, a filament of material having a circular cross section from a feeding mechanism 6.

The filament of material is advanced along the tubular body 250. Heating means H, in the form of the cylindrical heater cartridge 71a transfers heat to the filament through the material of the first half 7a. The heater cartridge 71a heats the filament material as it is advanced along the entire length of the heater block 7. Temperature output of the heater cartridge 71a is controlled via the closed-loop feedback controller discussed above.

The effects on the filament material as it is advanced along the liquefier tube 205 is similar to that of liquefier tube 105 and, for the sake of brevity, will not be described further. In the present example, the heater block 7 begins heating the filament material upstream of the first non-circular portion 253, such that the polymer of the filament material begins liquifying prior to having to change shape.

In the present example, the liquefier tube 205 of Figures 10 to 12 is manufactured by providing either a pair of metallic blocks, or a single metallic block and splitting it in two, and machining the profile of the first element A into a planar face of each so as to provide halves 7a, 7b.

The second element B is formed by providing a tubular body and forming a thread along a portion thereof. The third element C is formed in a similar manner to that of the second element B, with the additional step of welding the extrusion tip 255 to a free end thereof, to from an outlet for dispensing material in a molten state.

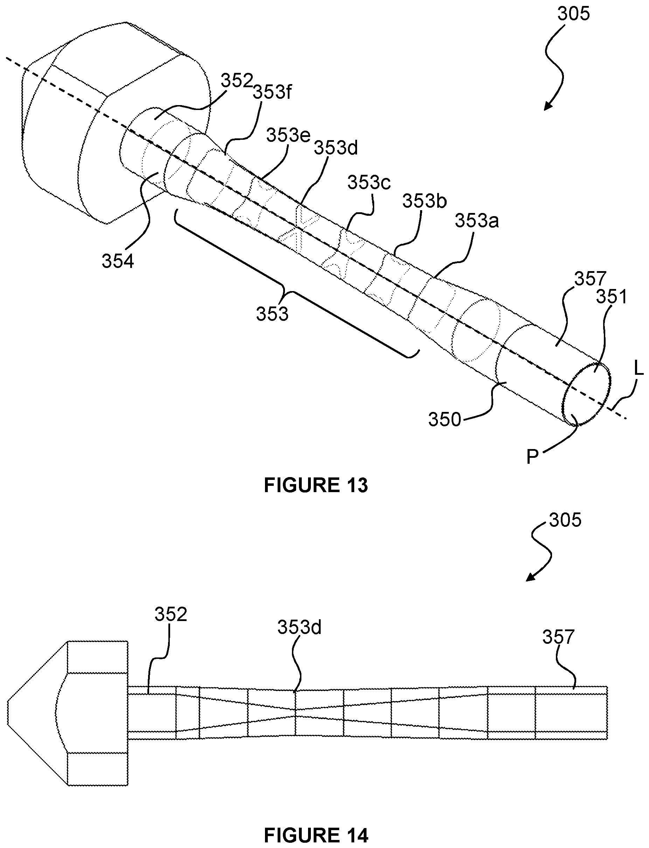

Referring now to Figures 13 to 16, there is shown a liquefier tube 305 according to another example of the invention, for use in the manufacturing system 1 of Figure 1.

The liquefier tube 305 is similar to liquefier tube 5, and like features will be denoted by like references incremented by '300'.

The liquefier tube 305 differs from the liquefier tube 5 in the cross-sectional profile in the non-circular portion 353.

A first, upstream end of the liquefier tube 305 is provided with an inlet portion 351 of substantially circular cross-section. A second, downstream end 352 of the liquefier tube 305, opposite the inlet portion 351, is also provided with a substantially circular cross-section. The inlet portion 351 and second end 352 are located at opposite ends of the tubular body 350.

Intermediate the inlet portion 351 and second end 352 is the non-circular portion 353 having a non-circular cross-section.

In the present example, the non-circular portion 353 has six discrete segments: a first segment 353a, second segment 353b downstream of first segment 353a, third segment 353c downstream of second segment 53b, a fourth segment 353d downstream of third segment 353c, a fifth segment 353e downstream of the fourth segment 353d and a sixth segment 353f downstream of the fifth segment 353e. Each of the segments 353a:353f are arranged in series along the longitudinal axis L of tubular body 350.

Moving toward the second end 352 from the inlet portion 351, the cross-sectional profile of the tubular body 350 is progressively deformed such that it has a cross or cruciform shape at the fourth segment 353d. Moving toward the second end 352 from the fourth segment 353d, the cross-sectional profile of the tubular body has a gradual or continual transition toward a substantially circular profile at the second end 352 and second end portion 354. In the non-circular portion 353, the distance from the heating means H (as shown in Figure 1, in particular) to the centre of the passageway P, and therefore centre of the filament material, or filament flow-path is reduced, allowing heat to more effectively reach the centre of the filament material.

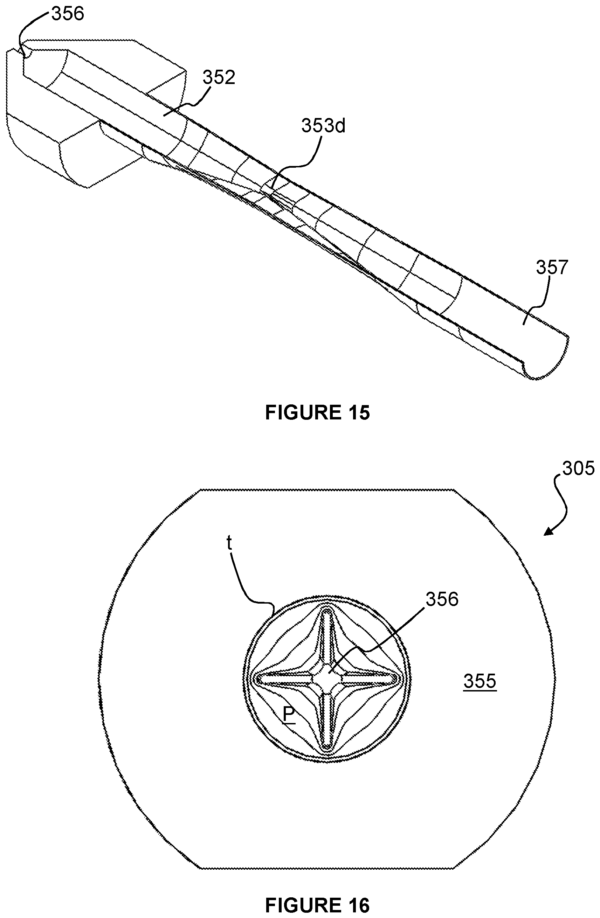

Further, the cross or cruciform profile provides a lower flow area (shown more clearly in Figure 16, in particular), allowing for more effective heat transfer into a filament material being conveyed along the passageway P. The restriction in flow area, in particular in the fourth segment 353d, also manipulates the filament material, promoting mixing.

The advancement of filament material, in use, is similar to that described above in relation to liquefier 5, 105 and 205 and, for the sake of brevity, will not be described further.

In the present example, the liquefier tube 305 of Figures 13 to 16 is manufactured by providing a tubular body 350 having a substantially constant wall thickness t and substantially circular cross-section. The tubular body 350 is deformed or crushed at locations defined by segments 353a:353f, so as to provide an inlet portion 351 and first end portion 357 having a substantially circular cross-section for receiving a filament of material (not shown), and a non-circular portion 353, formed of segments 353a:353f, each having a non-circular cross-section. A substantially continuous transition is provided between each segment 353a:353f.

In the present example, deforming or crushing the tubular body 350 is carried out by compressing the tubular body 50 at discrete points along its length using a press. In particular, in the present example, the tubular body 350 is deformed using a punch and die, or press brake.

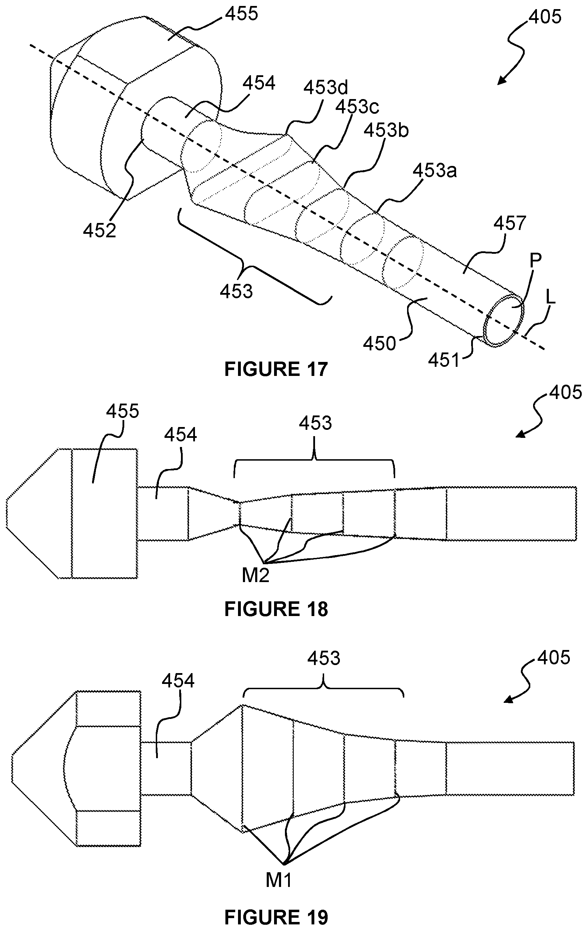

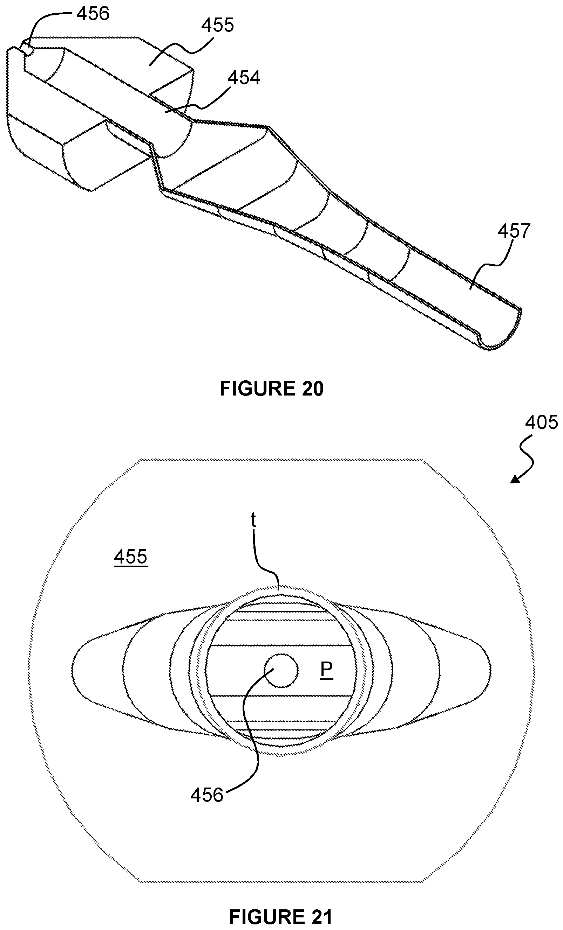

Referring now to Figures 17 to 21, there is shown a liquefier tube 405 according to another example of the invention, for use in the manufacturing system 1 of Figure 1.

The liquefier tube 405 is similar to liquefier tube 5, 105, 205 and 305 and like features will be denoted by like references incremented by '400'.

The liquefier tube 405 differs from the above-described liquefier tubes in that the flow path or passageway P described thereby has a constant hydraulic diameter $D_H$. The hydraulic diameter is defined by the following equation:

$$D_H = \frac{4A}{P}$$

Where $D_H$ is the hydraulic diameter, A is the flow area and P is the perimeter described by the tubular body 450.

Hydraulic diameter $D_H$ allows pipework of non-circular cross-section to be approximated as circular for the purposes of pressure drop and fluid flow rate calculations. Having a liquefier tube 405 having a constant hydraulic diameter $D_H$ provides, in use, a substantially constant pressure as a filament material is being advanced.

Therefore, in the case of liquefier tube 405, the change in cross-sectional shape in the non-circular portion 453 allows for more effective heat transfer to a filament material as is being advanced, but whilst without increasing the pressure applied to generate a given flow rate.

A first, upstream end of the liquefier tube 405 is provided with an inlet portion 451 of substantially circular cross-section. A second, downstream end 452 of the liquefier tube 405, opposite the inlet portion 451, is also provided with a substantially circular cross-section. The inlet portion 451 and second end 452 are located at opposite ends of the tubular body 450.

Intermediate the inlet portion 451 and second end 452 is the non-circular portion 453 having a non-circular cross-section. The first end portion 457, second end portion 454 and non-circular portion 453 have a constant hydraulic diameter $D_H$.

In the present example, the non-circular portion 453 has four discrete segments: a first segment 453a, second segment 453b downstream of first segment 453a, third segment 453c downstream of second segment 453b and a fourth segment 453d downstream of third segment 453c. Each of the segments 453a:453d are arranged in series along the longitudinal axis L of tubular body 450.

The tubular body 450 includes a continual transition when viewed downstream from the substantially circular cross section of the inlet portion 451 to the non-circular cross section of the first segment 453a. The cross sectional area at the inlet portion 451 is substantially equal to the cross sectional area of the first segment 453a in this example.

Like liquefier tube 5, each of the segments 453a:453d has a major dimension M1 and a minor dimension M2. When viewed downstream from the inlet portion 451 toward the second end 452, major dimension M1 increases whilst the minor dimension M2 decreases. The major dimension M1 reaches its maximum and the minor dimension M2 reaches its minimum at the fourth segment 453d.

Throughout the non-circular portion 453, the minor dimension M2 is less than the diameter of the inlet portion 451 and second end 452. Therefore, the distance from the sidewall of the tubular body 450 to the centre of the passageway P is reduced in the non-circular portion 453 when compared to the substantially circular cross-section of the inlet portion 451 and second end 452.

Downstream of the fourth segment 453d the non-circular portion 453 transitions sharply from a non-circular cross section to the second end portion 454 having a substantially circular cross section at the downstream end 452.

In the present example, the liquefier tube 405 of Figures 17 to 21 may be manufactured in a similar manner to that of liquefier tube 205 described above, *i.e.* by providing either a pair of metallic blocks, or a single metallic block and splitting it in two, and machining the profile of one half of the passageway P into a planar face of each so as to provide halves that, when brought together, describe passageway P.

As an alternative, the liquefier tube 405 may be manufactured by providing a sheet of metal and carrying out a hydroforming process so as to form one half of the tubular body 450. A pair of halves are then attached to one another so as to form the tubular body 450.

As a further alternative, the liquefier tube 405 may be manufactured by carrying out a hydroforming process on a tubular body 450. Deforming the tubular body 450 by hydroforming may comprise placing the tubular body 450 between a pair of dies and injecting fluid under pressure into passageway P. The fluid under pressure causes the tubular body 450 to deform such that it conforms to a profile described by the forming tool or pair of dies and forms non-circular portion 453.

An extrusion tip 455 is connected to the tubular body 450 at the other end 452, opposite the inlet portion 451, to form an outlet for dispensing material in a molten state. The extrusion tip 455 is welded to the tubular body 450 in the present example.

It will be appreciated by those skilled in the art that several variations to the aforementioned examples are envisaged without departing from the scope of the invention. For example, the non-circular portion of the tubular body need not have an obround cross-section. Instead, the non-circular portion may have any other suitable non-circular cross section, for example, rectangular, star-shaped, elliptical, square, oval, regular polygonal, irregular polygonal, simple convex polygonal or simple concave polygonal..

Although the tubular member is described as being formed of metal, in particular stainless steel, this need not be the case. Instead, the tubular member may be made of brass, copper, tungsten, titanium, molybdenum, beryllium copper or any other suitable metal or alloy.

Alternatively, the tubular member may be made of a polymeric material, e.g. a thermally conductive polymeric material.

Although the transition or change from the substantially circular inlet portion to the non-circular portion is described as being continual, the skilled person will appreciate that this need not be the case. Instead, the transition may comprise a staged, discretised and/or stepped transition.

In examples, the extrusion tip or nozzle may be removably connected to the liquefier tube or tubular body. Instead of being welded, as described above, the extrusion tip or nozzle may be brazed to the liquefier tube or tubular body.

The non-circular portion 53 is described as having a taper along a portion of the length of the tubular body 50. Alternatively, the non-circular portion of the tubular body may comprise a plurality of segments or sections. Each of the plurality of segments or sections may comprise a deformed or crushed segment of the tubular body. Each of the plurality of segments or sections may be arranged, e.g. in series, along the length of, or principal axis of, the liquefier tube or tubular body. Each of the plurality of segments or sections may be arranged along a longitudinal axis of the liquefier tube or tubular body.

Each of the plurality of segments or sections, hereinafter segments, may have a different cross-sectional shape, configuration or cross-sectional profile, e.g. from one another. One, e.g. a first, of the plurality of segments may have a different cross-sectional shape, configuration or cross-sectional profile from another, e.g. a second, of the plurality of segments.

In some examples, the first segment and the second segment, e.g. their major and/or minor dimensions, are rotationally offset or skewed from one another. The first segment and the second segment may be skewed or twisted from, or relative to, one another. The first segment and second segment may comprise a skew angle described therebetween. The first segment may comprise a portion of the tubular body deformed or crushed in a direction that is skewed or rotationally offset relative to a direction in which the second segment is deformed or crushed.

Corresponding minor and/or major dimensions of the first segment and second segment may be rotationally offset or skewed from one another.

Although the non-circular portion 53 is described as being uninterrupted, this need not be the case. Instead, the tubular body 50 may have a substantially circular portion intermediate two or more segments of the non-circular portion.

## Claims

1. A liquefier (5, 105, 205, 305, 405) for use in an extrusion-based additive manufacturing system (1), the liquefier describing a passageway (P) having an inlet portion (51, 151, 251, 351, 451) with a substantially circular cross-section for receipt of a filament of material and an outlet (56, 156, 256, 356, 456) downstream of the inlet portion, wherein the passageway transitions from the inlet portion to a non-circular portion (53, 153, 253, 353, 453) downstream of the inlet portion and the non-circular portion or a segment thereof splays or flares toward a substantially circular portion (54, 154, 254, 354, 454) at or toward the outlet, the non-circular portion having a non-circular cross-section.

2. A liquefier according to claim 1, wherein the non-circular cross-section of the non-circular portion, or one or more segments thereof, is star-shaped.

3. A liquefier according to claim 1 or claim 2, wherein the transition from the substantially circular portion to the non-circular portion, or one or more segments thereof comprises a continual transition, gradual transition and/or tapered transition.

4. A liquefier according to claim 1 or claim 2, wherein the transition from the substantially circular portion to the non-circular portion, or one or more segments thereof, comprises a staged, discretised and/or stepped transition.

5. A liquefier according to any preceding claim, wherein the non-circular portion comprises a major dimension (M1) and a minor dimension (M2) and the minor dimension decreases along a portion of the length of the non-circular portion and splays or flares toward the outlet.

6. A liquefier according to any preceding claim, wherein the inlet portion, the substantially circular portion and the non-circular portion of the passageway, or segments thereof, all have substantially equal cross-sectional areas.

7. A liquefier according to any preceding claim, wherein the non-circular portion comprises a plurality of segments (53a, 53b, 53c, 53d, 153, 158), each having a different cross-sectional shape or configuration.

8. A liquefier according to claim 7, wherein the passageway comprises a substantially circular portion intermediate a first segment and a second segment.

9. A liquefier according to any preceding claim, comprising a tubular body (50, 150, 350, 450) having a substantially constant wall thickness (t).

10. A liquefier according to any preceding claim, wherein the outlet comprises an extrusion tip (55, 155, 255, 355, 455) for dispensing material in a molten state.

11. A liquefier according to any preceding claim, wherein the liquefier is made of metal.

12. A liquefier assembly for use in an extrusion-based additive manufacturing system, the liquefier assembly comprising a liquefier (5, 105, 205, 305, 405) according to any preceding claim, and a heating element (H) for heating a filament of material received, in use, within the liquefier.

13. An additive manufacturing system (1) comprising a liquefier (5, 105, 205, 305, 405) according to any one of claims 1 to 11 or a liquefier assembly according to claim 12.

14. A method of manufacturing a liquefier tube (50, 150, 350, 450) according to any one of claims 1 to 10 for use in an extrusion-based additive manufacturing system, the method comprising providing a tubular body having a substantially constant wall thickness and substantially circular cross-section, deforming or crushing the tubular body at a location spaced from one of its ends, so as to provide an inlet portion having a substantially circular cross-section for receiving a filament of material, a non-circular portion having a non-circular cross-section downstream of the inlet and a substantially circular portion downstream of the non-circular portion.

**15.** A method of manufacturing a liquefier according to any one of claims 1 to 10 for use in an extrusion-based additive manufacturing system, the method comprising providing a first block of material (7a), machining a first part of a liquefier tube into a surface of the first block, providing a second block of material (7b), machining a second part of a liquefier tube into a surface of the second block and bringing the first block and second block together to describe a passageway of the liquefier tube.

**Patentansprüche**

**1.** Verflüssiger (5, 105, 205, 305, 405) zur Verwendung in einem System (1) zur generativen Fertigung auf Extrusionsbasis, wobei der Verflüssiger einen Durchgang (P) beschreibt, der einen Einlassabschnitt (51, 151, 251, 351, 451) mit einem im Wesentlichen kreisförmigen Querschnitt zur Aufnahme eines Materialfilaments und einen Auslass (56, 156, 256, 356, 456) stromabwärts des Einlassabschnitts aufweist, wobei der Durchgang von dem Einlassabschnitt zu einem nicht kreisförmigen Abschnitt (53, 153, 253, 353, 453) stromabwärts des Einlassabschnitts übergeht und der nicht kreisförmige Abschnitt oder ein Segment davon sich zu einem im Wesentlichen kreisförmigen Abschnitt (54, 154, 254, 354, 454) an oder hin zu dem Auslass ausbreitet oder aufweitet, wobei der nicht kreisförmige Abschnitt einen nicht kreisförmigen Querschnitt aufweist.

**2.** Verflüssiger nach Anspruch 1, wobei der nicht kreisförmige Querschnitt des nicht kreisförmigen Abschnitts oder eines oder mehrerer Segmente davon sternförmig ist.

**3.** Verflüssiger nach Anspruch 1 oder Anspruch 2, wobei der Übergang von dem im Wesentlichen kreisförmigen Abschnitt zu dem nicht kreisförmigen Abschnitt oder einem oder mehreren Segmenten davon einen kontinuierlichen Übergang, allmählichen Übergang und/oder sich verjüngenden Übergang umfasst.

**4.** Verflüssiger nach Anspruch 1 oder Anspruch 2, wobei der Übergang von dem im Wesentlichen kreisförmigen Abschnitt zu dem nicht kreisförmigen Abschnitt oder einem oder mehreren Segmenten davon einen gestuften, diskretisierten und/oder treppenförmigen Übergang umfasst.

**5.** Verflüssiger nach einem vorhergehenden Anspruch, wobei der nicht kreisförmige Abschnitt eine Hauptabmessung (M1) und eine Nebenabmessung (M2) umfasst und die Nebenabmessung entlang eines Abschnitts der Länge des nicht kreisförmigen Abschnitts abnimmt und sich hin zu dem Auslass ausbreitet oder aufweitet.

**6.** Verflüssiger nach einem vorhergehenden Anspruch, wobei der Einlassabschnitt, der im Wesentlichen kreisförmige Abschnitt und der nicht kreisförmige Abschnitt des Durchgangs oder Segmente davon alle im Wesentlichen gleiche Querschnittsflächen aufweisen.

**7.** Verflüssiger nach einem vorhergehenden Anspruch, wobei der nicht kreisförmige Abschnitt eine Vielzahl von Segmenten (53a, 53b, 53c, 53d, 153, 158) umfasst, von der jedes eine andere Querschnittsform oder -konfiguration aufweist.

**8.** Verflüssiger nach Anspruch 7, wobei der Durchgang einen im Wesentlichen kreisförmigen Abschnitt zwischen einem ersten Segment und einem zweiten Segment umfasst.

**9.** Verflüssiger nach einem vorhergehenden Anspruch, umfassend einen rohrförmigen Körper (50, 150, 350, 450), der eine im Wesentlichen konstante Wanddicke (t) aufweist.

**10.** Verflüssiger nach einem vorhergehenden Anspruch, wobei der Auslass eine Extrusionsspitze (55, 155, 255, 355, 455) zum Abgeben von Material in einem geschmolzenen Zustand umfasst.

**11.** Verflüssiger nach einem vorhergehenden Anspruch, wobei der Verflüssiger aus Metall ist.

**12.** Verflüssigerbaugruppe zur Verwendung in einem System zur generativen Fertigung auf Extrusionsbasis, wobei die Verflüssigerbaugruppe einen Verflüssiger (5, 105, 205, 305, 405) nach einem vorhergehenden Anspruch und ein Heizelement (H) zum Erhitzen eines in Verwendung innerhalb des Verflüssigers aufgenommenen Materialfilaments umfasst.

**13.** System (1) zur generativen Fertigung, umfassend einen Verflüssiger (5, 105, 205, 305, 405) nach einem der Ansprüche 1 bis 11 oder eine Verflüssigerbaugruppe nach Anspruch 12.

**14.** Verfahren zur Herstellung eines Verflüssigerrohrs (50, 150, 350, 450) nach einem der Ansprüche 1 bis 10 zur Verwendung in einem System zur generativen Fertigung auf Extrusionsbasis, wobei das Verfahren Bereitstellen eines rohrförmigen Körpers, der eine im Wesentlichen konstante Wanddicke und einen im Wesentlichen kreisförmigen Querschnitt aufweist, Verformen oder Zerdrücken des rohrförmigen Körpers an einer von einem seiner Enden beabstandeten Stelle, um einen Einlassabschnitt, der einen im Wesentlichen kreisförmigen Querschnitt aufweist, zum Aufnehmen eines Materialfilaments, einen nicht kreisförmigen Abschnitt, der einen nicht kreisförmigen Querschnitt aufweist, stromabwärts des Einlasses und einen im Wesentlichen kreisförmigen Abschnitt stromabwärts des nicht kreisförmigen Abschnitts bereitzustellen, umfasst.

15. Verfahren zur Herstellung eines Verflüssigers nach einem der Ansprüche 1 bis 10 zur Verwendung in einem System zur generativen Fertigung auf Extrusionsbasis, wobei das Verfahren Bereitstellen eines ersten Materialblocks (7a), Bearbeiten eines ersten Teils eines Verflüssigerrohrs zu einer Oberfläche des ersten Blocks, Bereitstellen eines zweiten Materialblocks (7b), Bearbeiten eines zweiten Teils eines Verflüssigerrohrs zu einer Oberfläche des zweiten Blocks und Zusammenbringen des ersten Blocks und des zweiten Blocks, um einen Durchgang des Verflüssigerrohrs zu beschreiben, umfasst.

## Revendications

1. Liquéfacteur (5, 105, 205, 305, 405) destiné à être utilisé dans un système de fabrication additive par extrusion (1), le liquéfacteur décrivant un passage (P) ayant une partie d'entrée (51, 151, 251, 351, 451) avec une section transversale sensiblement circulaire permettant la réception d'un filament de matériau et une sortie (56, 156, 256, 356, 456) en aval de la partie d'entrée, dans lequel le passage transite de la partie d'entrée à une partie non circulaire (53, 153, 253, 353, 453) en aval de la partie d'entrée et la partie non circulaire ou un segment de celle-ci s'évase ou s'épanouit vers une partie sensiblement circulaire (54, 154, 254, 354, 454) au niveau de ou vers la sortie, la partie non circulaire ayant une section transversale non circulaire.

2. Liquéfacteur selon la revendication 1, dans lequel la section transversale non circulaire de la partie non circulaire, ou un ou plusieurs segments de celle-ci, est en forme d'étoile.

3. Liquéfacteur selon la revendication 1 ou la revendication 2, dans lequel la transition de la partie sensiblement circulaire à la partie non circulaire, ou un ou plusieurs segments de celle-ci, comprend une transition continue, une transition progressive et/ou une transition conique.

4. Liquéfacteur selon la revendication 1 ou la revendication 2, dans lequel la transition de la partie sensiblement circulaire à la partie non circulaire, ou un ou plusieurs segments de celle-ci, comprend une transition étagée, discrétisée et/ou échelonnée.

5. Liquéfacteur selon l'une quelconque des revendications précédentes, dans lequel la partie non circulaire comprend une dimension majeure (M1) et une dimension mineure (M2) et la dimension mineure diminue le long d'une partie de la longueur de la partie non circulaire et s'évase ou s'épanouit vers la sortie.

6. Liquéfacteur selon l'une quelconque des revendications précédentes, dans lequel la partie d'entrée, la partie sensiblement circulaire et la partie non circulaire du passage, ou des segments de celle-ci, ont toutes des aires de section transversale sensiblement égales.

7. Liquéfacteur selon l'une quelconque des revendications précédentes, dans lequel la partie non circulaire comprend une pluralité de segments (53a, 53b, 53c, 53d, 153, 158), chacun ayant une forme ou une configuration de section transversale différente.

8. Liquéfacteur selon la revendication 7, dans lequel le passage comprend une partie sensiblement circulaire entre un premier segment et un second segment.

9. Liquéfacteur selon l'une quelconque des revendications précédentes, comprenant un corps tubulaire (50, 150, 350, 450) ayant une épaisseur de paroi sensiblement constante (t).

10. Liquéfacteur selon l'une quelconque des revendications précédentes, dans lequel la sortie comprend une pointe d'extrusion (55, 155, 255, 355, 455) pour distribuer un matériau à l'état fondu.

11. Liquéfacteur selon l'une quelconque des revendications précédentes, dans lequel le liquéfacteur est constitué de métal.

12. Ensemble liquéfacteur destiné à être utilisé dans un système de fabrication additive par extrusion, l'ensemble liquéfacteur comprenant un liquéfacteur (5, 105, 205, 305, 405) selon l'une quelconque des revendications précédentes, et un élément chauffant (H) destiné à chauffer un filament de matériau reçu, lors de l'utilisation, à l'intérieur du liquéfacteur.

13. Système de fabrication additive (1) comprenant un liquéfacteur (5, 105, 205, 305, 405) selon l'une quelconque des revendications 1 à 11 ou un ensemble liquéfacteur selon la revendication 12.

14. Procédé de fabrication d'un tube liquéfacteur (50, 150, 350, 450) selon l'une quelconque des revendications 1 à 10, destiné à être utilisé dans un système de fabrication additive par extrusion, le procédé comprenant la fourniture d'un corps tubulaire ayant une épaisseur de paroi sensiblement constante et une section transversale sensiblement circulaire, la déformation ou l'écrasement du corps tubulaire à un emplacement espacé de l'une de ses extrémités, de manière à fournir une partie d'entrée ayant une section transversale sensiblement circulaire permettant la réception d'un filament de matériau, une partie non circulaire ayant une section transversale non circulaire en aval de l'entrée et une partie sensiblement circulaire en aval de la partie non circulaire.

15. Procédé de fabrication d'un liquéfacteur selon l'une quelconque des revendications 1 à 10 destiné à être utilisé dans un système de fabrication additive par extrusion, le procédé comprenant la fourniture d'un premier bloc de matériau (7a), l'usinage d'une première partie d'un tube de liquéfacteur dans une surface du premier bloc, la fourniture d'un second bloc de matériau (7b), l'usinage d'une seconde partie d'un tube de liquéfacteur dans une surface du second bloc et le rapprochement du premier bloc et du second bloc pour décrire un passage du tube de liquéfacteur.

**FIGURE 1**

**FIGURE 2**

**FIGURE 3**

**FIGURE 4**

**FIGURE 5**

**FIGURE 6**

**FIGURE 7**

**FIGURE 8**

105

t

156

155

P

**FIGURE 9**

7

71a

72a

C

7a

205

P

255

72b

7b

71b

**FIGURE 10**

**FIGURE 11**

**FIGURE 12**

**FIGURE 13**

**FIGURE 14**

**FIGURE 15**

**FIGURE 16**

**FIGURE 17**

**FIGURE 18**

**FIGURE 19**

**FIGURE 20**

**FIGURE 21**

**EP 4 132 765 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2905118 A

- US 5005731 A